# EUROPEAN PATENT SPECIFICATION

(11) **EP 3 532 776 B1**
(45) Date of publication and mention of the grant of the patent: **23.12.2020**
(21) Application number: 16798294.1
(22) Date of filing: 25.10.2016
(51) Int. Cl.: F24F 3/16, F24F 11/00, F24C 15/20, B03C 3/017, B03C 3/06, B03C 3/155, B03C 3/36, B03C 3/41, B03C 3/49, F24F 11/30, F24F 110/00

(54) **FILTER SYSTEM FOR FILTERING A FLOW, EXTRACTOR HOOD COMPRISING SUCH FILTER, AND METHOD FOR FILTERING AIR**
FILTERSYSTEM ZUM FILTERN EINES STROMS, DUNSTABZUGSHAUBE MIT SOLCH EINEM FILTER UND VERFAHREN ZUM FILTERN VON LUFT
SYSTÈME DE FILTRATION D'ÉCOULEMENT, HOTTE À EXTRACTION COMPRENANT UN TEL SYSTÈME DE FILTRATION ET PROCÉDÉ DE FILTRATION D'AIR

(43) Date of publication of application: 04.09.2019
(73) Proprietor: PlasmaMade B.V., 7951 SK Staphorst (NL)
(72) Inventor: VAN DER SLUIS, Martin Johan, 7951 PM Staphorst (NL)
(74) Representative: Verdijck, Gerardus
(86) International application number: PCT/NL2016/050736
(87) International publication number: WO 2018/080302

(56) References cited:
- WO-A1-03/061717
- WO-A2-2008/057262
- US-A- 5 647 890
- US-A- 5 759 487

## Description

The present invention relates to a filter system for filtering a flow, more specifically for filtering an air flow. Such filter systems can be used in kitchens for cooking facilities, production environments and hospitals, for example.

Known filter systems use a fan to draw in air through an inlet opening or a suction opening. The air is forced through one or more filters including a grid and/or carbon filters. The air is discharged to the environment or is recirculated. These filter systems are also referred to as passive filters.

Also known, are active filters including an electrostatic filter and/or a plasma filter generating ozone. Such filter system is described in NL 2009138 and WO03/061717, for example.

Document WO 03/061717 discloses a method and an apparatus for regulating an amount of ozone incident to an air stream of an air purifier. The air purifier has a number of UV lamps, a catalyst, a first sensor, a second sensor, a ventilating duct, an array of baffles and a fan.The array of baffles is designed to increase or decrease the travel path of the air stream for exposure by the UV light. Furthermore, the UV lamps and catalyst move with respect to each other for varying the amount of exposure of the UV lamps to the contaminated air stream to regulate the ozone incident on the air stream. The UV-lights are kept switched on constantly to prolong lifetime and reduce maintenance cost. This means that there is a continuous production of ozone, which only varies in amount of ozone produced.

Conventional passive filters have a varying performance strongly depending on maintenance, for example. Active filters produce ozone and require additional energy.

The present invention has for its object to obviate or at least reduce one or more of the aforementioned problems and to provide an effective and efficient filter system.

The present invention provides for this purpose a filter system for filtering a flow according to claim 1.

The filter system comprises a filter housing with an inlet opening or suction opening for the indrawn flow, such as an airflow in a kitchen facility. In the housing there are provided an electrostatic filter and a plasma filter.

The electrostatic filter preferably realizes a direct voltage of for instance 5 kV which is transmitted to a screen/gaze. Gaze includes screens, grids and similar elements. A first gaze or screen acts as a first electrode and a second gaze or screen acts as a second electrode. The electrodes are separated, preferably using a filling material to fill the gap between the two electrodes. Preferably, the filling material comprises glass fibre material. By providing a glass fibre material, an improved filtering of contaminations out of the indrawn air is achieved. In particular, contaminations are trapped in the glass fibre filter. The glass fibre material cooperates with the electrostatic filter such that an electric discharge eliminates the contaminations trapped in the glass fibre material. This provides additional filtering of the indrawn air.

In presently preferred embodiments of the invention the gazes or screens extend in a direction that is substantially perpendicular to the (average) air flow. A type of potential filter is hereby realized with which an electrostatic field is created. Contaminations, including particles such as smoke particles, fungi, odour particles, pollen, bacteria, moisture, viruses, fungi and so on, can be captured by means of such a filter and thereby removed from the indrawn air.

Providing a plasma filter, with the plasma filter being capable of functioning as an ozone generator, achieves an additional air cleaning. The plasma filter generates ozone and/or radicals that react with contaminations, such as odours, in the indrawn air. Preferably, the ozone generator of the plasma filter is operatively connected to an ozone sensor. In practice, ozone is also referred to as plasma. For the purpose of this document ozone relates to ozone/plasma.

It has been found that in particular a combination of an electrostatic filter and a plasma filter achieves an effective cleaning due to the production and effective use of radical particles. These particles act on the cell walls and other parts of undesired particles/contaminations in the indrawn air. In presently preferred embodiments of the invention the plasma filter is positioned in the air flow before the electrostatic filter. Contaminations are first subjected to the plasma filter and thereafter to the electrostatic filter. It was shown that this provided an effective filtering of the indrawn air.

The filter system according to the invention further comprises a controller that is proactively connected to a sensor. The sensor is configured for measuring the indrawn airflow, more specifically for measuring specific characteristics of the indrawn airflow including one or more of: air quantity, air speed, contamination including odours, etc. In one of the presently preferred embodiments of the invention the sensor comprises an Ozone detector that is configured to measure the Ozone level in the indrawn air. The sensor or sensors provide the measurement information to the controller that may decide to active or deactivate the filter system and/or to adjust the parameters or settings of the filter system. This improves the overall safety of the filter system and its environment. Furthermore, it enables the use of a filter system having a higher maximum capacity that can be controlled at the desired capacity taking into account the actual conditions.

The controller typically activates the filters of the filter system in presence of an airflow. Therefore, the filters are activated only in case of an airflow. This reduces the energy requirements for the filter system. According to the invention, the controller adjusts frequencies and/or voltage levels of the electrostatic filter and/or plasma filter. This renders the climate system more effective and efficient as compared to conventional filter systems.

The one or more sensors can be provided in combination with the housing of the filter system. For example, the sensor can be attached to a grid, gaze, screen, finishing/covering element or rosette, for example. Also, one or more of the sensors can be provided in a room and/or building provided with the filter system according to the invention. This provides further information to the controller. The sensors may transmit and/or receive information to and/or from the controller with a wireless and/or wired protocol. This enables automatic control. The sensor may relate to a flow sensor configured for measuring quantity of air, a particle detector for detection of undesired particles, for example. It will be understood that the use of other sensor types can also be envisaged. In certain embodiments of the invention the filter system comprises a fan, and, optionally, the fan acts as a flow sensor providing information about the air flow to the controller.

The filter system according the invention prevents unnecessary energy usage that is caused by over-treating the indrawn air. Furthermore, this reduces the amount of ozone that is produced by the filter system. This provides an efficient and effective filter system.

It was surprisingly shown that the combination of electrostatic and plasma filters does not require providing a conventional carbon filter. Omitting such conventional carbon filters from the filter system has the advantage that the maintenance requirements and cleaning efforts of such carbon filters are prevented. Furthermore, costs of the filter system are herewith reduced. Furthermore, this achieves a more constant performance of the filter system.

In presently preferred embodiments of the invention the outlet is provided with an insulating material, for example glass fibre material or any other suitable material. This insulating material preferably extends over the entire outlet in a direction substantially perpendicular to the (average) outgoing airflow through the outlet. This insulating material has sound reducing properties, thereby reducing the effects of the filter system of the invention on its surroundings.

In a presently preferred embodiment of the invention the inlet of the filter system is provided in an inlet housing.

By providing the inlet in an inlet housing the filter system is more flexible in relation to its dimensions. For example, the inlet housing is integrated in or with the filter housing. Alternatively, the inlet housing is provided separately from the filter housing and connected by a hinge or rotation axis, such that the inlet housing is movable relative to the filter housing. This enhances the flexibility of installing the filter system according to the invention. For example, when installing the filter system in an extractor hood of a kitchen, the available space is often limited. Providing the inlet in a separate inlet housing enables placing the filter system in a wide variety of extractor hoods and kitchen designs. As a further advantage, providing the inlet in a separate inlet housing provides the possibility to design the inlet and inlet housing, such that transfer of the noise produced by the filter system to its environment or surroundings is significantly reduced.

In a further preferred embodiment of the invention, the filter system comprises a motor configured to withdraw air from the environment or surroundings to provide the air to the suction opening of the filter system. In a presently preferred embodiment, the motor is placed in the inlet housing of the filter system. The motor may use a fan to withdraw air from the surroundings. Optionally, this fan acts as flow sensor and is operatively connected to the controller of the filter system. This provides an effective and efficient filter system.

In a further preferred embodiment of the invention, the filter housing is provided with an outlet surface extending over substantially the outer surface of the filter housing and having a width and height, wherein the height is smaller than the width. For example, the filter system has an inlet that is directed downwards and an outlet that is provided at the circumference of the filter housing, directing the airflow substantially horizontal. The filter housing extends in a vertical lengthwise direction. In the horizontal plane the filter housing has a height and a width. For circular housings, these heights and widths are substantially equal. In one of the preferred embodiments, the height is smaller than the width, thereby leading to an oval or rectangular shaped filter housing. This provides additional freedom to the design of the filter housing, thereby improving possibilities for installing the filter system in a wide variety of situations.

In an alternative embodiment of the invention, the filter housing further comprises a fan configured to generate energy for driving one or more of the filters of the filter system. In fact, the fan acts as a turbine and provides a stand-alone filter system. Such stand-alone filter system can be applied when the filter system is provided in a naturally or artificially generated airflow that drives the fan. Preferably, the fan acts as a sensor for the controller to activate and/or adjust settings of the filter system.

In a further preferred embodiment of the invention the controller comprises user inputs enabling separate activation of the electrostatic and plasma filters. This provides additional flexibility of the filter system of the invention with its characteristics being adaptive to the specific conditions wherein the filter system is being used.

In an advantageous embodiment according to the present invention, the controller further comprises a user interface.

By providing a user interface an effective operation of the climate system is achieved. The user interface can be wireless and/or wired. The user interface renders the climate system flexible and adjustable to the specific conditions in which it is used. Preferably, the user interface comprises a touch screen, a tablet, mobile phone or other electronic device. By providing the user interface as a touch screen, tablet, mobile phone or similar electronic device, a user has easy access to the operating parameters of the climate system. This enables the user to control and/or adjust the filtering operation in an effective manner. For example, a so-called app can be downloaded to enable control via the electronic device of a specific climate system. Furthermore, this enable remote access for installing a software update, maintenance and the like. Also, the system can optionally send a warning signal to the user thereby achieving an interactive system.

In a further advantageous preferred embodiment according to the present invention a conical body is provided in or close to the suction opening.

By providing a conical body, the air drawn in using the fan is guided as optimally as possible through the electric filter. The surface area of the whole filter is hereby also utilized as fully as possible.

The conical body preferably provided with a shape such that a substantially uniform air distribution through the filter is realized during use. This further increases the effectiveness of the system.

The conical body is preferably provided with a number of ribs for better guiding of the airflow thereby. It has been found here that it is advantageous to provide the ribs in a spiral shape so as to thereby further improve the guiding of the airflow.

In the system according to a preferred embodiment of the invention, air with contamination enters a pre-chamber along with the indrawn contaminated air. The conical body preferably guides the air to the filter parts. Formed in a second chamber are radical particles with which the cleaning reactions take place substantially in a third chamber between the electrodes, preferably at the position of a glass fibre (nano)mat, which holds the particles. Following the reactions, discharge preferably takes place via an active carbon mat with which excess ozone is also captured. The outer casing of the system is shaped such that a further sound reduction is thereby realized.

Preferably, the housing comprises a plastic housing. A safer system is realized by providing a plastic housing when compared to a metal housing due to the insulating character of the housing. In addition, the overall weight of the filter system according to the invention is also reduced. This makes it easier to handle the system and assemble it on site.

The invention further relates to an extractor hood comprising a filter system in one of the aforementioned embodiments.

Such extractor hood provides the same effects and advantages as stated for the filter system. Such extractor hood is typically included in a kitchen or kitchen facility.

The invention further also relates to a method for filtering air, the method comprising the steps of:
- providing a filter system in one of the afore described embodiments;
- drawing in air through an inlet opening;
- activating the plasma filter by the controller in response to a measurement of the sensor; and
- filtering the indrawn air.

The method provides the same effects and advantages as those stated for the filter system and/or extractor hood.

Preferably, the method further comprises the step of providing user input with a user interface. This enables flexible operation of a climate system. The user interface preferably comprises a touch screen, tablet, mobile phone or other electronic device. This enables user friendly adjustments of controller settings.

It has been found that a self-cleaning action of the filters is realized with the preferred combination of filters as described above. This preferably realized self-cleaning action has a positive effect on the lifespan of the system and/or the time interval between maintenance operations.

Further advantages, features and details of the invention are elucidated on the basis of a preferred embodiment thereof, wherein reference is made to the accompanying drawings, in which:
- figures 1A and B a filter system according to the invention with internal motor;
- figures 2A-C an alternative filter system of the invention according to the invention with integrated inlet housing;
- figures 3A-C a further alternative embodiment according to the invention with separate inlet housing;

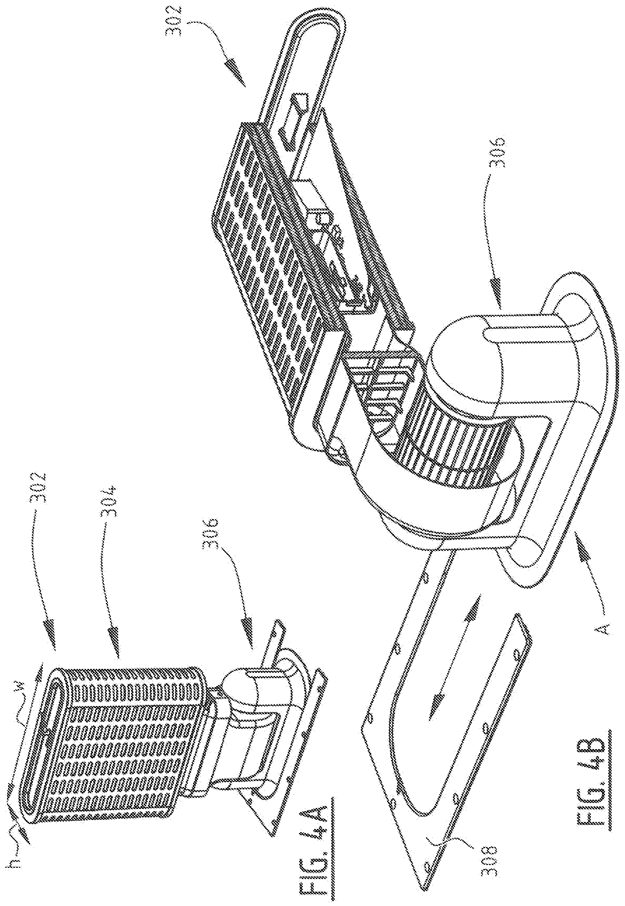

- figures 4A and B a further alternative filter system according to the invention with a different shape of the outlet surface;
- figures 5A and B an alternative filter system according to the invention;
- figure 6 a further alternative embodiment of the invention with extractor hood; and
- figure 7 an alternative filter system operating as a turbine.

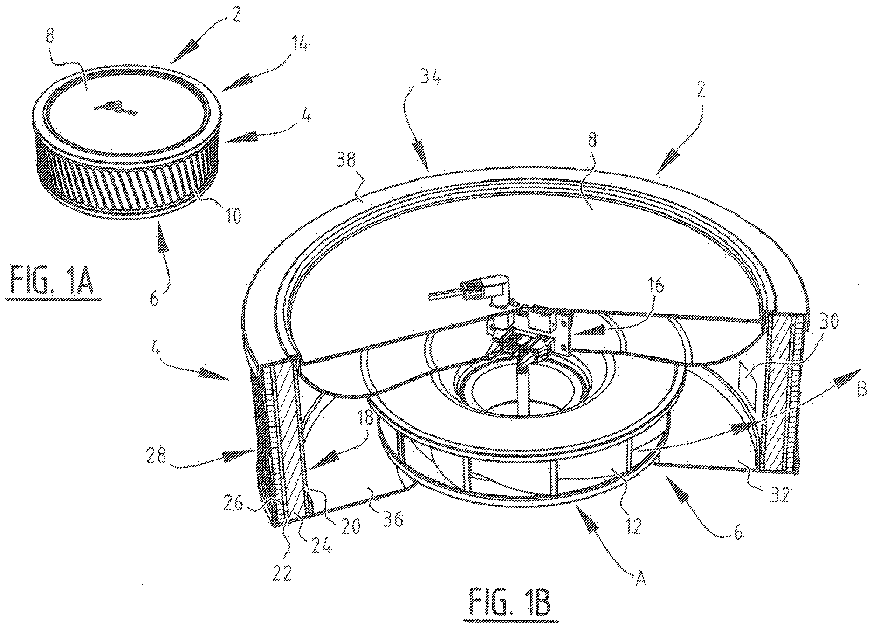

Filter system 2 (Figures 1A-B) comprises a circumferential surface 4, bottom inlet 6, upper part or cover part 8. In the illustrated embodiment outlet surface 4 is provided with inclined openings 10. Airflow enters inlet 6 in direction A and leaves through outlet 4 in direction B. Fan 12 is driven by motor 14 that is activated and controlled by controller 16. Fan 12 directs air towards outlet surface 4. Electrostatic filter 18 comprises inner gaze, grid or screen 20 acting as first electrode and outer gaze, grid or screen 22 acting as second electrode. In the illustrated embodiment first electrode 20 is positively charged and second electrode 22 is negatively charged. First and second electrodes 20, 22 are provided at a distance relative to each other and a glass fibre filling material 24 is provided between electrodes 20, 22. On the other side of electrostatic filter 18 there is provided insulation filter 26 that is positioned directly against grid 28 of outer surface 4. Plasma generator 30 is provided in chamber 32 of filter system 2. In the illustrated embodiment filter housing 34 comprises bottom plate 36, top plate cover 8, ring 38 and outer surface grid 28. It will be understood that other configurations can also be envisaged in accordance with the invention.

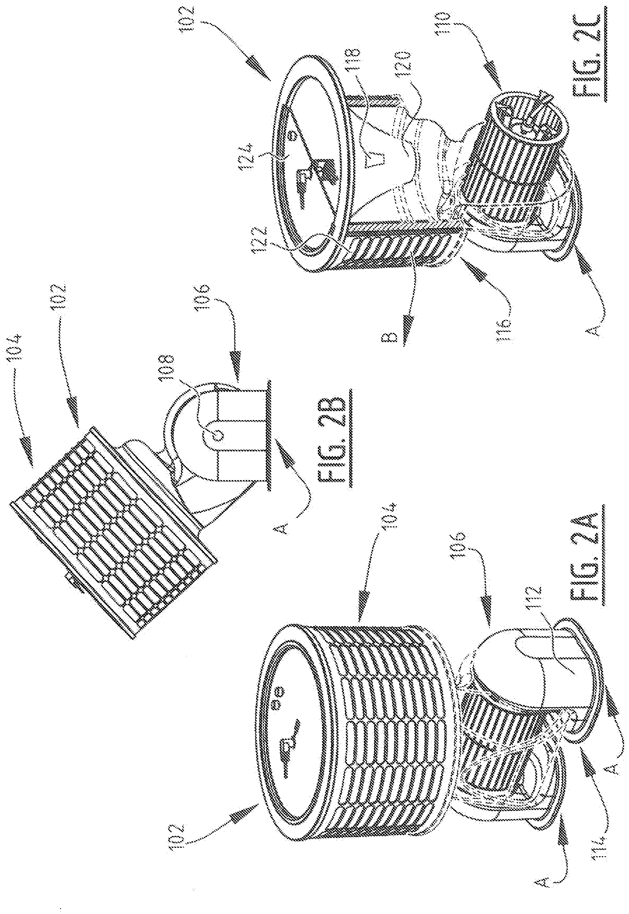

Second embodiment 102 (Figures 2A-C) illustrates a filter system with filter housing 104 and inlet housing 106 that are integrated into a single housing. In the illustrated embodiment, filter housing 104 and inlet housing 106 are rotatable around axis or shaft 108. A motor and/or fan 110 are provided in inlet housing 106. Supports 112 define inlet ports 114 that draw in air in direction A. Inside inlet housing 106 air is directed towards the inlet of filter housing 104 of filter system 102. Filter system 102 has a similar construction for electrode filter 116 and the optional plasma filter 118. Filter housing 104 is further provided with conical body 120, optionally provided with additional ribs. Air flow A is directed towards the outer surface in direction B with the use of conical body 120. In the illustrated embodiment outlet openings 122 extend in a horizontal direction relative to filter housing 104 and substantially parallel to top or cover plate 124.

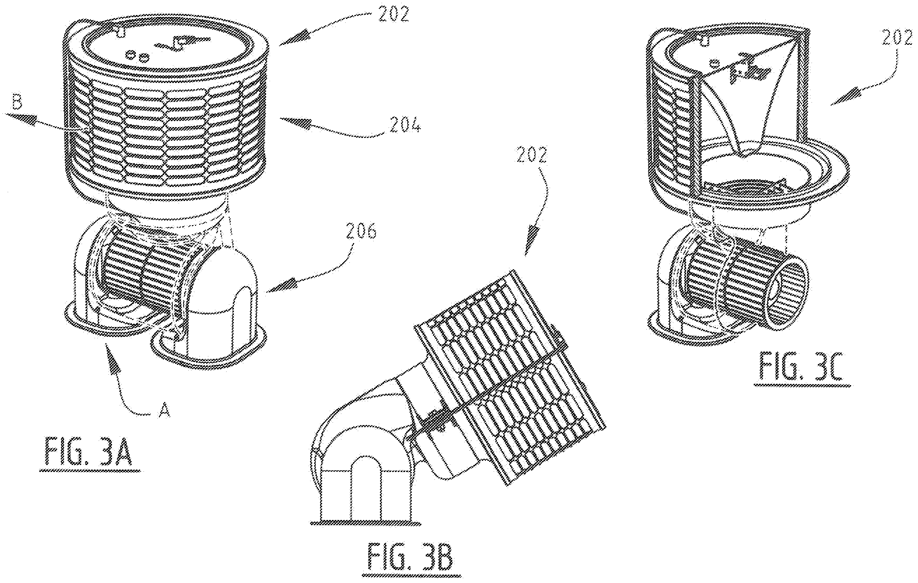

A third embodiment of filter system 202 (Figures 3A-C) is similar to filter system 102 with the exception that filter housing 204 and inlet housing 206 are provided separately. In the illustrated embodiment this requires external connecting cable 208. The operation of filter system 202 is similar to the illustrated second embodiment 102.

In a fourth embodiment filter system 302 filter housing 304 has a rectangular or oval shape having width w and height h, wherein height h is smaller that width w. Furthermore, inlet housing 306 has an oval inlet opening and is provided with support 308. Inlet housing 306 can be slid into support 308. It will be understood that other embodiments are also possible. The oval or rectangular shape enables installing filter system 302 in relatively small spaces.

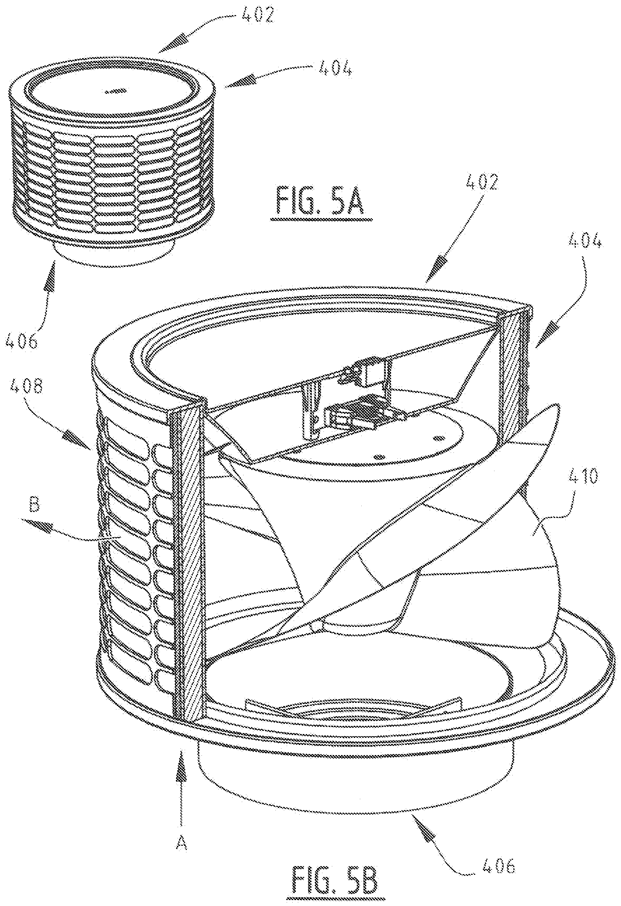

A fifth embodiment filter system 402 (Figures 5A-B) is provided with filter housing 404 and inlet 406. Air flows in direction A and leaves direction B through outlet 408. Flow A is generated externally. Inside filter housing 404 there is provided fan 410 that starts rotating in the presence of flow A. therefore, fan 410 acts a a energy generating turbine capable of generating electricity to supply filters of filter system 402 operate in a similar manner as described earlier for other embodiments.

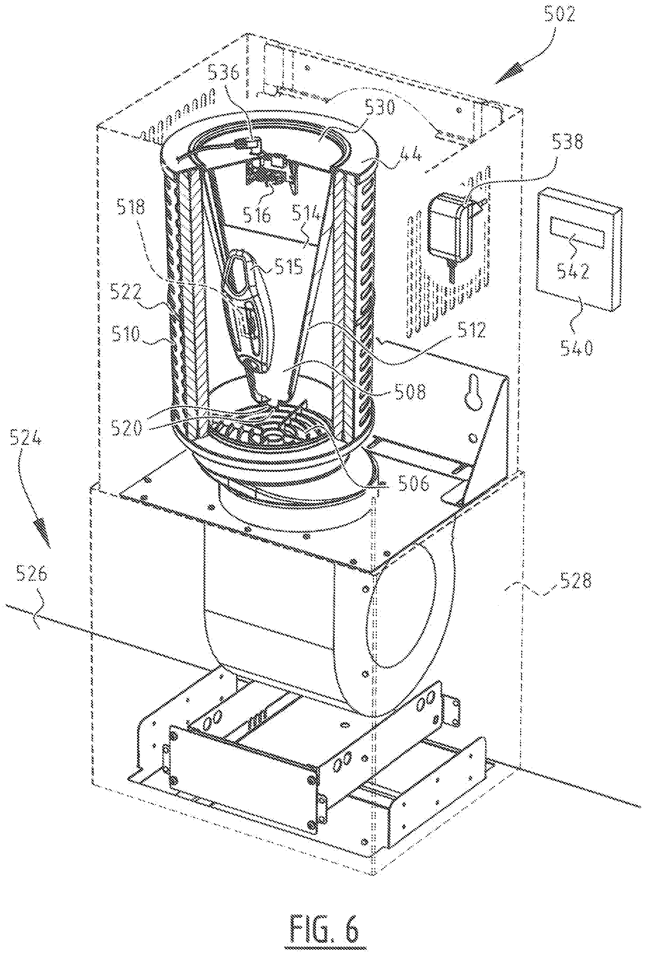

A sixth embodiment filter system 502 comprises a filter housing 504 with an inlet 506, conical body 508, outlet surface 510 (Figure 6). Conical body 508 is in the illustrated embodiment provided with ribs 512. It will be understood that ribs 512 can be omitted from conical body 508 and can also be provided with the other embodiments of filter system 2, 102, 202, 302, 402. Ozone generator 515 is connected to conical body 512.

Cone 508 is provided with printed circuit board 514 which is operatively connected to connector 516. Arranged on cone 508 is plasma generator 515 provided with ozone plate 518 which is arranged with a clamping part in or on generator 515. Printed circuit board 514 is provided with sensors 520 on the side directed downward during use. Outer casing 510 is provided with bracket 522 for mounting on for instance an extractor hood. The filter inlet is provided with grate 506. Cover 530 is provided with connector 532, buttons 534 and a connection 536 for plug/adapter 538 which is connected to connector 516.

Filter system 502 is connected to extractor hood 524 with extractor hood module 526 and air extraction module 528.

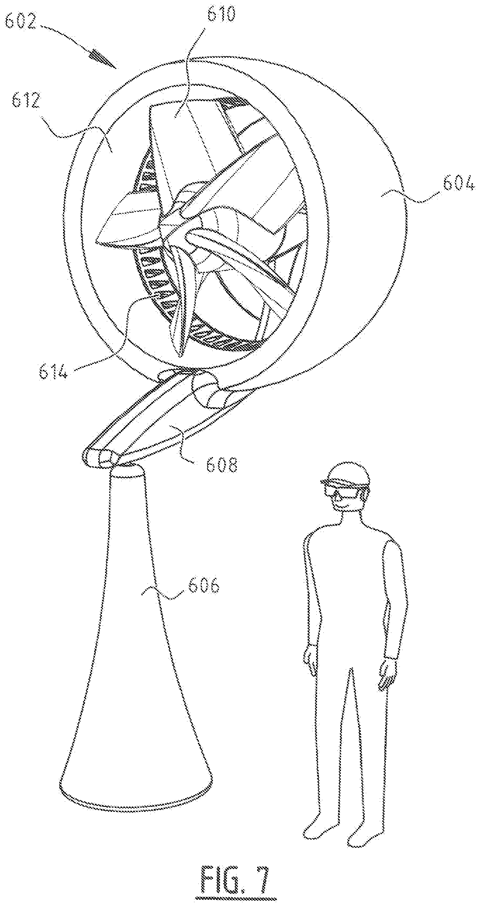

In a different embodiment of filter system 602 (Figure 7) ring shaped filter housing 604 is provided on pedestal 606 with arm 608. Filter system 602 acts as turbine with fan 610. In the illustrated embodiment the inside 612 of filter housing 604 is provided with ozone outlet 614 that are activated by fan 610. Filter system 602 can be used to filter outside air and/or outlet air of factories, for example.

Operation of filter systems 2, 102, 202, 302, 402, 502, 602 preferably involves the use of control panel 540 with display 542. When a filter system is activated, for example with control 540 in several of the embodiments a fan and/or motor will draw in air via the inlets. In some of the illustrated embodiments, sensors are arranged, optionally on the conical body, that will detect the presence, and type and/or level of contamination of the airflow. This signal is transmitted to the controller that can be cooperated into the encapsulated electronic space. The controller activates the ozone generator and/or electrostatic filter.

In the shown embodiment of system 2,102,202,302,402,502,602 the voltage used preferably lies in the range of 0.05 Volt-10 kV, more preferably in the range of 0.5-2 kV in normal ambient conditions. A voltage of 2-4 kV is employed for the optionally provided ozone generator.

In the shown embodiment a standby mode is provided which can if desired be continuously "active".

It will be apparent that combinations with other types of filter are also possible. Filter system 2 can also be utilized in applications other than in extractor hood or building. For example, the filter system can be applied to kitchen facility, more specifically an extractor hood, an exhaust pipe, in the outside air etc. Alternatively, the filter system is provided in open room such as in a vehicle, airplane, building, etc.

Assembly of the filter system begins with a grating or mesh or grid, following which a second grating or mesh is provided at a short distance, for instance 40 mm, such that an inner and an outer annular cross-section are provided. This is the core of electrostatic filter 18, for example. The grids are connected. A glass fibre mat is preferably arranged in the intermediate space. Isolation mat 26 is arranged on the outer side. An ozone element 30 is subsequently arranged in a housing which is then optionally placed on conical element 508, for example. The conical element can then be placed in the interior, where after the wiring can be connected. An end plate can be arranged following placing. In a currently preferred embodiment a printed circuit board is then adhered fixedly in the filter housing. The end plate with sensor can subsequently be arranged so that filter system is mounted and can be applied.

A filter system has been tested in an experiment in a kitchen. Recirculation was started at about 200 m³/hour for about 10 minutes prior to the cooking process in order to bring about a good circulation. In the applied situation the ozone binds the undesired particles with an efficiency of about 95%. The noise reduction realized was about 25% compared to the conventional extraction.

It will be understood that different features and embodiments of the illustrated filter systems can be exchanged and/or combined resulting in additional alternative embodiments according to the invention. For example, the conical body can be applied to different embodiments or be omitted therefrom. The conical body can be provided with ribs or grooves optionally. The turbine operation or a fan can be provided in different embodiments of the filter system. Also, different types of sensors can be applied and combined in the different embodiments. Also, other features can be applied to the different embodiments.

The present invention is by no means limited to the above described preferred embodiments thereof. The rights sought are defined by the following claims, within the scope of which many modifications can be envisaged. The filter according to the invention complies with the required standards, including the Dutch NEN 7120. The filter is quickly mountable, also when applied in existing and conventional extractor hoods. In a currently preferred embodiment settings are preferably provided in adjustable and re-adjustable manner, preferably on a printed circuit board of the filter.

## Claims

1. Filter system for filtering a flow, comprising:
- a filter housing having a suction opening for inlet of an indrawn flow and an outlet for outlet of a filtered flow;
- an electrostatic filter configured for electrostatic filtering of the indrawn flow, with the electrostatic filter comprising a first gaze acting as a first electrode and a second gaze acting as a second electrode that is placed at a distance of the first gaze, and a filing material provided between the first and second gazes;
- a plasma filter configured for generating ozone and providing the ozone to the indrawn flow;
- a sensor configured for measuring the indrawn airflow and capable of generating measurement input; and
- a controller operatively connected to the sensor, wherein the controller comprises an ozone activator configured to activate the plasma filter in response to the measurement input, and wherein the controller is additionally configured to adjust frequencies and/or voltage levels of electrostatic filter and/or plasma filter.

2. Filter system according to claim 1, wherein the sensor comprises a flow sensor configured for measuring the indrawn airflow.

3. Filter system according to claim 1 or 2, wherein the sensor comprises a particle detector configured for detection of undesired particles.

4. Filter system according to claim 1, 2 or 3, wherein the inlet is provided in an inlet housing.

5. Filter system according to claim 4, wherein the inlet housing is moveable relative to the filter housing.

6. Filter system according to one of the foregoing claims, further comprising a motor configured to withdraw air from the surroundings of the filter system and to provide the air to the suction opening of the filter system.

7. Filter system according to one of the foregoing claims, wherein the filter housing is provided with an outlet surface extending over substantially the outer surface of the filter housing and having a width and a height, wherein the height is smaller than the width.

8. Filter system according to one of the foregoing claims, wherein the filter housing further comprising a fan configured to generate energy for driving one or more of the filters of the filter system.

9. Filter system according to claim 8, wherein the fan acts as sensor for the controller.

10. Filter system according to one of the foregoing claims, wherein the outlet is provided with a non-carbon filter.

11. Filter system according to one of the foregoing claims, wherein the controller comprises user inputs enabling separate activation of the electrostatic and plasma filters, and/or wherein the controller further comprises a user interface and wherein the user interface preferably comprises a touch screen, tablet or mobile phone.

12. Filter system according to one or more of the foregoing claims, wherein a conical body is provided in or close to the suction opening such that a substantially uniform air distribution through the filter is realized during use.

13. Extractor hood comprising a filter system as claimed in one of the foregoing claims.

14. Method for filtering air using a filter according to any of the foregoing claims, comprising the steps of:
- providing a filter system according to one of the foregoing claims 1-12;
- drawing in air through an inlet opening;
- activating the plasma filter by the controller in response to a measurement of the sensor; and
- filtering the indrawn air.

15. Method according to claim 14, wherein the filter system has a self-cleaning action during use.

## Patentansprüche

1. Filtersystem zum Filtern eines Stroms, das aufweist:
- ein Filtergehäuse, das eine Ansaugeöffnung für einen Einlass eines eingesogenen Stroms und einen Auslass zum Auslassen eines gefilterten Stroms aufweist;
- einen elektrostatischen Filter, der zur elektrostatischen Filterung des eingesogenen Stroms ausgestaltet ist, wobei der elektrostatische Filter eine erste Gaze aufweist, die als eine erste Elektrode fungiert, und eine zweite Gaze, die als eine zweite Elektrode fungiert, die in einem Abstand von der ersten Gaze angeordnet ist, und ein Füllmaterial zwischen der ersten und zweiten Gaze vorgesehen ist;
- einen Plasmafilter, der ausgestaltet ist, um Ozon zu erzeugen und das Ozon dem eingesogenen Strom bereitzustellen;
- einen Sensor, der ausgestaltet ist, um den eingesogenen Luftstrom zu messen und der dazu ausgelegt ist, eine Messeingabe zu erzeugen; und
- eine Steuereinheit, die betriebsfähig mit dem Sensor verbunden ist, wobei die Steuereinheit einen Ozonaktivator aufweist, der ausgestaltet ist, um den Plasmafilter in Reaktion auf die Messeingabe zu aktivieren, und wobei die Steuereinheit darüber hinaus ausgestaltet ist, die Frequenzen und/oder Spannungsebenen des elektrostatischen Filters und/oder des Plasmafilters anzupassen.

2. Filtersystem nach Anspruch 1, wobei der Sensor einen Strömungssensor aufweist, der ausgestaltet ist, um den eingesogenen Luftstrom zu messen.

3. Filtersystem nach Anspruch 1 oder 2, wobei der Sensor einen Partikeldetektor aufweist, der zur Erfassung unerwünschter Partikel ausgestaltet ist.

4. Filtersystem nach Anspruch 1, 2 oder 3, wobei der Einlass in einem Einlassgehäuse vorgesehen ist.

5. Filtersystem nach Anspruch 4, wobei das Einlassgehäuse bezüglich des Filtergehäuses bewegbar ist.

6. Filtersystem nach einem der vorhergehenden Ansprüche, das weiterhin einen Motor aufweist, der ausgestaltet ist, um Luft aus den Umgebungen des Filtersystems einzuziehen und die Luft der Ansaugeöffnung des Filtersystems bereitzustellen.

7. Filtersystem nach einem der vorhergehenden Ansprüche, wobei das Filtergehäuse mit einer Auslassfläche vorgesehen ist, die im Wesentlichen über die Außenfläche des Filtergehäuses verläuft und eine Breite und eine Höhe hat, wobei die Höhe kleiner als die Breite ist.

8. Filtersystem nach einem der vorhergehenden Ansprüche, wobei das Filtergehäuse weiterhin ein Flügelrad aufweist, das ausgestaltet ist, um Energie zum Antrieb von einem oder mehreren der Filter des Filtersystems zu erzeugen.

9. Filtersystem nach Anspruch 8, wobei das Flügelrad als Sensor für die Steuereinheit fungiert.

10. Filtersystem nach einem der vorhergehenden Ansprüche, wobei der Auslass mit einem kohlenstofffreien Filter vorgesehen ist.

11. Filtersystem nach einem der vorhergehenden Ansprüche, wobei die Steuereinheit Benutzereingaben aufweist, die eine getrennte Aktivierung der elektrostatischen und der Plasmafilter ermöglichen und/oder wobei die Steuereinheit weiterhin eine Benutzerschnittstelle aufweist und wobei die Benutzerschnittstelle vorzugsweise einen berührungsempfindlichen Bildschirm, ein Tablet oder ein Mobiltelefon aufweist.

12. Filtersystem nach einem oder mehreren der vorhergehenden Ansprüche, wobei ein konischer Körper in oder nahe der Ansaugeöffnung vorgesehen ist, sodass eine im Wesentlichen einheitliche Luftverteilung durch den Filter während der Verwendung verwirklicht wird.

13. Abzugshaube, die ein Filtersystem nach einem der vorhergehenden Ansprüche aufweist.

14. Verfahren zum Filtern von Luft mittels eines Filters nach einem der vorhergehenden Ansprüche, das die Schritte aufweist:
- Vorsehen eines Filtersystems nach einem der vorhergehenden Ansprüche 1 bis 12;
- Einsaugen von Luft durch eine Einlassöffnung;
- Aktivieren des Plasmafilters durch die Steuereinheit in Reaktion auf eine Messung des Sensors; und
- Filtern der eingesogenen Luft.

15. Verfahren nach Anspruch 14, wobei das Filtersystem während der Verwendung eine selbstreinigende Tätigkeit hat.

## Revendications

1. Système de filtres permettant de filtrer un écoulement, comprenant :
- un boîtier de filtres ayant une ouverture d'aspiration pour une arrivée d'un écoulement admis et une sortie pour une sortie d'un écoulement filtré ;
- un filtre électrostatique configuré pour une filtration électrostatique de l'écoulement admis, avec le filtre électrostatique comprenant une première gaze servant de première électrode et une seconde gaze servant de seconde électrode qui est placée à distance de la première gaze, et un matériau de remplissage fourni entre les première et seconde gazes ;
- un filtre à plasma configuré pour générer de l'ozone et fournir l'ozone à l'écoulement admis ;
- un capteur configuré pour mesurer l'écoulement d'air admis et capable de générer une entrée de mesure ; et
- un dispositif de commande relié fonctionnellement au capteur, dans lequel le dispositif de commande comprend un activateur à l'ozone configuré pour activer le filtre à plasma en réponse à l'entrée mesurée, et dans lequel le dispositif de commande est en plus configuré pour ajuster des fréquences et/ou des niveaux de tension de filtre électrostatique et/ou de filtre à plasma.

2. Système de filtres selon la revendication 1, dans lequel le capteur comprend un capteur d'écoulement configuré pour mesurer l'écoulement d'air admis.

3. Système de filtres selon la revendication 1 ou 2, dans lequel le capteur comprend un détecteur de particules configuré pour une détection de particules non souhaitées.

4. Système de filtres selon la revendication 1, 2 ou 3, dans lequel l'arrivée est fournie dans un boîtier d'arrivée.

5. Système de filtres selon la revendication 4, dans lequel le boîtier d'arrivée est mobile par rapport au boîtier de filtres.

6. Système de filtres selon l'une des revendications précédentes, comprenant en outre un moteur configuré pour retirer de l'air des environs du système de filtres et pour fournir l'air à l'ouverture d'aspiration du système de filtres.

7. Système de filtres selon l'une des revendications précédentes, dans lequel le boîtier de filtres est doté d'une surface de sortie s'étendant sensiblement sur la surface extérieure du boîtier de filtres et ayant une largeur et une hauteur, dans lequel la hauteur est plus petite que la largeur.

8. Système de filtres selon l'une des revendications précédentes, dans lequel le boîtier de filtres comprenant en outre un ventilateur configuré pour générer de l'énergie permettant de piloter un ou plusieurs des filtres du système de filtres.

9. Système de filtres selon la revendication 8, dans lequel le ventilateur sert de capteur pour le dispositif de commande.

10. Système de filtres selon l'une des revendications précédentes, dans lequel la sortie est dotée d'un filtre sans charbon.

11. Système de filtres selon l'une des revendications précédentes, dans lequel le dispositif de commande comprend des entrées d'utilisateur permettant une activation séparée des filtres électrostatique et à plasma, et/ou dans lequel le dispositif de commande comprend en outre une interface utilisateur et dans lequel l'interface utilisateur comprend de préférence un écran tactile, une tablette ou un téléphone mobile.

12. Système de filtres selon une ou plusieurs des revendications précédentes, dans lequel un corps conique est fourni dans ou à proximité de l'ouverture d'aspiration de sorte qu'une distribution d'air sensiblement uniforme à travers le filtre soit réalisée pendant l'utilisation.

13. Hotte à extraction comprenant un système de filtres selon l'une des revendications précédentes.

14. Procédé permettant de filtrer de l'air en utilisant un filtre selon l'une quelconque des revendications précédentes, comprenant les étapes consistant à :
- fournir un système de filtres selon l'une des revendications précédentes 1 à 12 ;
- attirer de l'air à travers une ouverture d'arrivée ;
- activer le filtre à plasma par le dispositif de commande en réponse à une mesure du capteur ; et
- filtrer l'air admis.

15. Procédé selon la revendication 14, dans lequel le système de filtres a une action autonettoyante pendant l'utilisation.
